# EUROPÄISCHE PATENTSCHRIFT

(11) **EP 2 871 108 B1**
(45) Veröffentlichungstag und Bekanntmachung des Hinweises auf die Patenterteilung: **04.09.2019**
(21) Anmeldenummer: 14191637.9
(22) Anmeldetag: 04.11.2014
(51) Int. Cl.: B61D 17/02, F16B 5/02, F16F 1/44

(54) **VERBINDUNGSANORDNUNG ZUM BEFESTIGEN EINES VERKLEIDUNGSTEILS AN EINEM FAHRZEUG, INSBESONDERE SCHIENENFAHRZEUG, UND ENTSPRECHENDES SCHIENENFAHRZEUG**
CONNECTING ASSEMBLY FOR FIXING A PANEL PART ON A VEHICLE, ESPECIALLY RAILWAY VEHICLE, AND CORRESPONDING RAILWAY VEHICLE
SYSTÈME DE CONNEXION DESTINÉ À FIXER UNE PARTIE DE REVÊTEMENT SUR UN VÉHICULE, EN PARTICULIER UN VÉHICULE FERROVIAIRE, ET VÉHICULE SUR RAIL CORRESPONDANT

(30) Priorität: 08.11.2013 DE 102013018714
(43) Veröffentlichungstag der Anmeldung: 13.05.2015
(73) Patentinhaber: Bombardier Transportation GmbH, 10785 Berlin (DE)
(72) Erfinder: Bialoscek, André, 14482 Potsdam (DE)
(74) Vertreter: Cohausz & Florack

(56) Entgegenhaltungen:
- EP-A1- 0 348 930
- DE-A1-102005 019 185
- DE-B4- 10 349 702
- FR-A- 898 055
- GB-A- 651 358
- US-A1- 2013 256 959

## Beschreibung

Die vorliegende Erfindung betrifft eine Verbindungsanordnung zum Befestigen eines Verkleidungsteils an einem Fahrzeug, insbesondere Schienenfahrzeug, mit einem Fahrzeug, mit einem Träger, der ein erstes Bauteil bildet und Bestandteil des Fahrzeugs ist, mit dem Verkleidungsteil, das ein zweites Bauteil bildet, mit einem sich entlang einer Pufferelementlängsachse erstreckenden Pufferelement, das mit dem einen der Bauteile verbunden ist, und mit einem sich entlang einer Aufsatzelementlängsachse erstreckenden Aufsatzelement, das mit dem anderen der Bauteile verbunden ist, wobei das Aufsatzelement auf das Pufferelement aufgesetzt ist. Ferner betrifft die Erfindung ein entsprechendes Schienenfahrzeug mit einer solchen Verbindungsanordnung.

Eine solche Verbindungsanordnung ist aus der DE 103 49 702 B4 bekannt.

Aus der DE 10 2005 019 185 A1 ist es bekannt, mittels einer wie zuvor beschriebenen Verbindungsanordnung verschiedene Bauteile eines Schienenfahrzeugs miteinander zu verbinden. Als Beispiel werden insbesondere die Seitenwände, das Untergestell, das Dach und die Kopftragstruktur des Schienenfahrzeugs genannt. Die Verbindung zwischen zwei Bauteilen erfolgt, indem die beiden Bauteile aneinander anliegen und im Bereich ihrer Berührungsstelle koaxial zueinander angeordnete Aufnahmebohrungen aufweisen, wobei in die miteinander fluchtenden Aufnahmebohrungen ein Pufferelement mit einer konusförmigen äußeren Mantelfläche eingeführt wird, welches die beiden Bauteile miteinander verbindet. Das eine der Bauteile bildet einen Träger und weist im Bereich der Aufnahmebohrung eine Verdickung auf. Die Aufnahmebohrung in diesem Bauteil hat, auch im Bereich der Verdickung, eine innere Mantelfläche, die ebenfalls einen konusförmigen Verlauf hat, wobei die innere Mantelfläche des Bauteils und die äußere Mantelfläche des Pufferelements einander entsprechen, so dass im eingesetzten Zustand des Pufferelements dieses vollständig an der Innenfläche der Aufnahmebohrung anliegt. Um die Stabilität und Festigkeit der Verbindung zu erhöhen, verläuft durch das gesamte Pufferelement hindurch ein Bolzen in Form einer Schraube, wobei der Bolzen im eingeschraubten Zustand das Pufferelement innerhalb der Aufnahmebohrung an einem Ende radial auseinander drückt und somit zusätzlich innerhalb der Aufnahmebohrung durch Kraftschluss fixiert.

Ein Verkleidungsteil der zuvor beschriebenen Art kann beispielsweise eine Seitenverkleidung bzw. Einhausung sein, die dazu dient, den inneren Bereich innerhalb des Wagenkastens des Fahrzeugs, insbesondere den inneren Bereich im Untergestell des Fahrzeugs, vom äußeren Bereich, das heißt der äußeren Umgebung des Fahrzeugs, und den damit verbundenen Umgebungseinflüssen (Fahrtwind, Regen, Schmutz etc.) zu trennen. Solche Verkleidungsteile werden in der Regel bei Schienenfahrzeugen mechanisch durch Schraubenverbindungen fest angebracht und nach jeder notwendigen Demontage muss die Verkleidung neu ausgerichtet werden, das heißt der Fugenverlauf und die Kontur müssen entsprechend den angrenzenden Bauteilen angepasst werden. Es ist auch bekannt, solche Verkleidungsteile durch Schnellverschlüsse zu befestigen, die abhängig von der Ausführung des Schienenfahrzeugs zum Teil nach außen hin deutlich sichtbar sind, was den optischen Gesamteindruck des Schienenfahrzeugs negativ beeinflussen kann.

Zunehmend gibt es daher bei der Herstellung von Schienenfahrzeugen, insbesondere Hochgeschwindigkeitszügen, die Forderung nach einer schnellen und einfachen Demontage bzw. Montage von Verkleidungsteilen, um die Life-Cycle-Costs (Lebenszykluskosten) möglichst gering zu halten.

Aus der GB 651,358 A ist eine Verbindungsanordnung zum Befestigen eines ersten Bauteils an einem Träger bekannt. Dabei können der Träger 24 mit einem Pufferelement und das Bauteil mit einem Aufsatzelement verbunden sein. Das Pufferelement und das Aufsatzelement können zwischen den beiden miteinander zu verbindenden Bauteilen angeordnet sein. Das Aufsatzelement ist mittels einer Mutter, die auf einen Bolzen geschraubt ist, fest verbunden.

Es ist daher eine Aufgabe der vorliegenden Erfindung, eine Verbindungsanordnung zu schaffen, die eine möglichst einfache Montage eines Verkleidungsteils an einem Schienenfahrzeug gewährleistet.

Die zuvor hergeleitete und aufgezeigte Aufgabe wird gemäß einer ersten Lehre der vorliegenden Erfindung bei einer Verbindungsanordnung zum Befestigen eines Verkleidungsteils an einem Fahrzeug, insbesondere Schienenfahrzeug, beispielsweise Hochgeschwindigkeitszug, mit einem Fahrzeug, mit einem Träger, der ein erstes Bauteil bildet und Bestandteil des Fahrzeugs ist, mit dem Verkleidungsteil, das ein zweites Bauteil bildet, mit einem sich entlang einer Pufferelementlängsachse erstreckenden Pufferelement, das mit dem einen der Bauteile, insbesondere unbeweglich, verbunden, insbesondere verschraubt, ist, und mit einem sich entlang einer Aufsatzelementlängsachse erstreckenden Aufsatzelement, das mit dem anderen der Bauteile, insbesondere unbeweglich, verbunden, insbesondere daran angeschweißt oder einstückig damit ausgeführt, ist, wobei das Aufsatzelement auf das Pufferelement aufgesetzt ist, dadurch gelöst, dass das Pufferelement und das Aufsatzelement zwischen Verkleidungsteil und Träger angeordnet sind, wobei das Verkleidungsteil den Träger insbesondere zumindest nicht an der Verbindungsstelle, vorzugsweise überhaupt nicht, berührt, und die Verbindung zwischen Pufferelement und Aufsatzelement flexibel ist und wobei das Pufferelement einen Bolzen mit einem Bolzenkopf und einem Bolzenschaft und einen mit dem Bolzen verbundenen Kopf mit einem zum Bolzen weisenden ersten Ende und einem vom Bolzen wegweisenden zweiten Ende aufweist, wobei das Material des Kopfes eine höhere Elastizität als das Material des Trägers und des Aufsatzelements aufweist.

Ausgestaltungen sind in den Unteransprüchen und in der folgenden Beschreibung beschrieben.

Die erfindungsgemäße Verbindungsanordnung erlaubt eine besonders einfache Montage und Demontage eines Verkleidungsteils, wie im Folgenden noch näher erläutert wird. Ein weiterer Vorteil ist, dass durch diese spezielle Verbindungsanordnung die Anzahl der von außen sichtbaren Befestigungspunkte, welche den optischen Gesamteindruck negativ beeinflussen, auf ein Minimum reduziert wird. Beispielsweise ist nur noch ein Befestigungspunkt (je Verkleidungsteil bzw. je Verbindungsanordnung) von außen sichtbar, beispielsweise im Bereich einer optionalen weiteren Verbindung, z.B. festen Schraubverbindung, zwischen Verkleidungsteil und Fahrzeug, wie sie ebenfalls im Folgenden noch erläutert wird.

Der besagte Träger bzw. das erste Bauteil ist Bestandteil des Fahrzeugs und bildet insbesondere einen Teil des Wagenkastens des Fahrzeugs, vorzugsweise des Untergestells des Wagenkastens, oder ist damit fest verbunden, beispielsweise verschraubt. Bei dem Verkleidungsteils bzw. zweiten Bauteil handelt es sich insbesondere um eine Außenverkleidung, also ein den inneren Bereich des Fahrzeugs vom äußeren Bereich trennendes Verkleidungsteil, beispielsweise eine Seitenschürze, die den inneren Bereich im Untergestell des Fahrzeugs vom äußeren Bereich trennt.

Wenn das Aufsatzelement auf das Pufferelement aufgesetzt ist bzw. das Pufferelement in das Aufsatzelement eingeführt ist, verlaufen die Pufferelementlängsachse und die Aufsatzelementlängsachse im unbelasteten Zustand der Verbindungsanordnung, das heißt wenn quer zur Pufferelementlängsachse bzw. Aufsatzelementlängsachse keine Kräfte auf die Verbindungsanordnung wirken, koaxial zueinander. Wenn im Folgenden die einzelnen Bauteile der Verbindungsanordnung und deren Zusammenwirken beschrieben werden, bezieht sich dies immer auf diesen unbelasteten Zustand, das heißt den Normalzustand der Verbindungsanordnung. Dieser ist bei Stillstand des Fahrzeugs gegeben, wenn keine Last auf das Verkleidungsteil wirkt. In diesem Zustand besteht zumindest über einen Teil der Länge und/oder Breite des Pufferelements und über einen Teil der Länge und/oder Breite des Aufsatzelements ein Formschluss zwischen Pufferelement und Aufsatzelement, und zwar einerseits in einer Verlaufsrichtung der Pufferelement- bzw. Aufsatzelementlängsachse und andererseits quer dazu.

Mit einer flexiblen Verbindung zwischen Pufferelement und Aufsatzelement ist eine nicht-starre Verbindung gemeint, das heißt im verbundenen Zustand sind Relativbewegungen im Belastungsfall zwischen Pufferelement und Aufsatzelement, zumindest translatorische Bewegungen quer zur Pufferelement- bzw. Aufsatzelementlängsachse und/oder Schwenkbewegungen um eine Achse senkrecht zur Pufferelement- bzw. Aufsatzelementlängsachse, möglich. Wie im Weiteren noch erläutert wird, kann das Pufferelement zu diesem Zweck zumindest teilweise aus einem elastischen Material bestehen, welches im Belastungsfall von dem Aufsatzelement verformbar ist.

Mittels der erfindungsgemäßen Verbindungsanordnung kann das Verkleidungsteil an dieser Stelle durch eine Steckverbindung mit dem Träger verbunden werden. Dazu ist das Pufferelement, insbesondere unbeweglich bzw. starr, mit dem Träger, insbesondere dem Wagenkasten, vorzugsweise dem Untergestell des Wagenkastens, verbunden, während das Aufsatzelement mit dem Verkleidungsteil, insbesondere unbeweglich bzw. starr, verbunden oder damit einstückig ausgeführt ist. Das Verkleidungsteil mit dem daran befindlichen Aufsatzelement wird dann auf das am Träger befestigte Pufferelement aufgesetzt, wobei im Folgenden die Richtung, in der das Pufferelement mit dem Aufsatzelement verbunden wird, als Z-Richtung bezeichnet wird. In Z-Richtung ist die Verbindung zwischen Pufferelement und Aufsatzelement also formschlüssig. Entgegen der Z-Richtung lässt sich diese Verbindung leicht trennen.

An einer anderen Stelle, die von der erfindungsgemäßen Verbindungsanordnung in Z-Richtung und/oder vertikal (in Schwerkraftrichtung) beabstandet liegt, kann das Verkleidungsteil über eine weitere Verbindung, z.B. eine Schraubverbindung, zusätzlich mit dem Fahrzeug, insbesondere einem wie zuvor beschriebenen Träger, verbunden sein. Das Verkleidungsteil lässt sich dann vom übrigen Fahrzeug dadurch lösen, dass zunächst die Schraubverbindung gelöst wird und anschließend das Verkleidungsteil lediglich angehoben werden muss.

Das ermöglicht, nach einmaliger Erstjustierung im Werk, eine zueinander fest definierte Position beider Bauteile, das heißt von Verkleidungsteil und Träger. Dadurch kann eine schnelle Demontage bzw. Montage erfolgen, da das am Träger befestigte und einmalig justierte Bauteil die Lage des Verkleidungsteils im Raum, das heißt in X-, Y- und Z-Richtung, fest definiert. Die weitere Verbindung zwischen Verkleidungsteil und Fahrzeug, z.B. eine Schraubverbindung, die zusätzlich zu der erfindungsgemäßen Verbindungsanordnung vorgesehen sein kann, verhindert Bewegungen in Richtungen, die durch Freiheitsgrade der Verbindung zwischen Pufferelement und Aufsatzelement nicht blockiert sind, d.h. z.B. in Z-Richtung.

Zum Zwecke dieser Erstjustierung kann der Träger eine Konsole aufweisen, die in zwei von der Z-Richtung verschiedenen Richtungen (X-Richtung und Y-Richtung, beide senkrecht zur Schwerkraftrichtung verlaufend, das heißt in einer horizontalen Ebene) einstellbar sein kann. In Z-Richtung ist eine Höheneinstellung des mit dem Träger verbunden Bauteils beispielsweise durch eine Schraubverbindung möglich, insbesondere eine Schraubverbindung zwischen Pufferelement und Träger bzw. Konsole des Trägers.

Die im Betrieb des Schienenfahrzeugs, zum Teil impulsartig (durch Zugbegegnungen oder Tunnelfahrten), auftretenden aerodynamischen Lasten bewirken eine Krafteinleitung in X-Richtung. Das Pufferelement ist, wie noch erläutert wird, in seinen Eigenschaften so beschaffen, dass es einen definierten Verformungsweg (Dämpfung) in genau diese Krafteinleitungsrichtung bewirkt. Dadurch werden die Belastungen auf die Verbindungsanordnung und das Verkleidungsteil reduziert und es kann ein geringeres Gewicht des Verkleidungsteils erreicht werden.

Die zusätzliche Schraubverbindung zwischen Verkleidungsteil und übrigem Fahrzeug kann wie folgt ausgebildet sein. An dem Verkleidungsteil, insbesondere dem oberen Ende des Verkleidungsteils, können am Wagenkasten angeschweißte Laschen vorgesehen sein, an denen Halter befestigt werden können. Die Halter wiederum sind mit dem Verkleidungsteil verbunden. Dabei können Toleranzen durch Langlöcher in X- und/oder Y-Richtung aufgenommen werden. Die Verbindung zwischen Verkleidungsteil und Wagenkasten wird durch eine Schraubverbindung, welche Toleranzen in Y- und Z-Richtung aufnehmen kann (z.B.: Robert-Wagner-Verschlüsse), hergestellt. Diese verhindern eine Bewegung der Verkleidung in X-Richtung und vor allem auch in Z-Richtung. Durch diese Sperrung in Verbindung mit der erfindungsgemäßen Verbindungsanordnung im insbesondere unteren Teil des Verkleidungsteils (Sperrung in X- und Y-Richtung) werden alle Freiheitsgrade eingeschränkt.

Im Folgenden werden nun weitere Ausgestaltungen der erfindungsgemäßen Verbindungsanordnung beschrieben.

Während erfindungsgemäß vorgesehen ist, dass das Pufferelement einen Bolzen mit einem Bolzenkopf und einem Bolzenschaft und einen mit dem Bolzen verbundenen Kopf mit einem zum Bolzen weisenden ersten Ende und einem vom Bolzen wegweisenden zweiten Ende aufweist, wobei das Material des Kopfes eine höhere Elastizität als das Material des Trägers und des Aufsatzelements aufweist, ist es gemäße einer Ausgestaltung bevorzugt, wenn das Material des Kopfes auch eine höhere Elastizität als der Bolzen, aufweist, wobei der Kopf insbesondere einen sich vom Bolzen weg zum zweiten Ende verjüngenden Körper aufweist. Mit einem sich verjüngenden Körper ist gemeint, dass die Mantelfläche bzw. gegenüberliegende Abschnitte der Mantelfläche (in einem Schnitt entlang der Pufferelementlängsachse) zu einem Ende des Pufferelements aufeinander zu laufen. Der Kopf hat wie gesagt eine höhere Elastizität als Träger und Aufsatzelement. Grundsätzlich ist es auch denkbar, dass der Bolzen eine höhere Elastizität als Träger und Aufsatzelement hat. Bei dem Bolzen kann es sich um eine Schraube handeln.

Gemäß noch einer Ausgestaltung der erfindungsgemäßen Verbindungsanordnung ist vorgesehen, dass der Bolzenkopf zumindest oberseitig und seitlich, insbesondere vollständig, vom Material des Kopfes umgeben ist. Oberseitig bedeutet, dass der Bolzenkopf in Richtung vom Bolzenschaft weg vom Material des Kopfes des Pufferelements überdeckt und das Material insbesondere mit dem Bolzenkopf in Kontakt ist. Seitlich meint die Richtung quer zur Pufferelementlängsachse (radiale Richtung), wobei dann in dieser Richtung der Bolzenkopf vom Material des Kopfes des Pufferelements überdeckt und das Material insbesondere mit dem Bolzenkopf in Kontakt ist. Zusätzlich kann der Bolzenkopf auch unterseitig vom Material des Kopfes oder aber einem zusätzlichen Halteelement, welches mit dem Material des Kopfes verbunden ist, abgedeckt und insbesondere in Kontakt sein. Die Verbindung zwischen Bolzenkopf und Kopf des Pufferelements kann durch Stoffschluss und/oder Formschluss erfolgen. Als Stoffschluss kann beispielsweise ein Verkleben oder Anvulkanisieren vorgesehen sein.

Gemäß noch einer Ausgestaltung der erfindungsgemäßen Verbindungsanordnung ist vorgesehen, dass der Kopf aus einem Material mit einem Elastizitätsmodul von höchstens 3000 N/mm², bevorzugt höchstens 1000 N/mm², besonders bevorzugt höchstens 500 N/mm², besteht. Ein solcher Elastizitätsmodul kann auch grundsätzlich für den Bolzen vorgesehen sein, wobei dieser dann aber nicht aus Metall besteht. Grundsätzlich besteht der Bolzen vorzugsweise aus Metall und/oder der Kopf des Pufferelements aus einem Kunststoff.

Gemäß noch einer Ausgestaltung der erfindungsgemäßen Verbindungsanordnung ist vorgesehen, dass das Aufsatzelement eine umlaufende Wand aufweist, die einen Aufnahmeraum für das Pufferelement begrenzt und dadurch definiert, wobei das Aufsatzelement insbesondere hülsenförmig oder napfförmig ausgebildet ist. Hülsenförmig bedeutet, dass die Wand um die Aufsatzelementlängsachse herum angeordnet ist, wobei das Aufsatzelement in beiden Verlaufsrichtungen der Aufsatzelementlängsachse nicht verschlossen ist. Napfförmig bedeutet dagegen, dass die Wand um die Aufsatzelementlängsachse herum verläuft und das Aufsatzelement in einer Verlaufsrichtung der Aufsatzelementlängsachse verschlossen ist, somit die Form eines Napfes bildet. Dabei ist in allen Fällen denkbar, dass die Innenflächen gegenüberliegender Abschnitte der Wand (bei einem Schnitt entlang der Aufsatzelementlängsachse) zu einem Ende des Aufsatzelements aufeinander zulaufen und/oder der Aufnahmeraum sich zu einem Ende des Aufsatzelements verjüngt. Grundsätzlich wäre es aber auch denkbar, dass die Innenflächen bzw. die Wand zumindest abschnittsweise oder vollständig zylindrisch ist/sind, die Wandflächen also parallel zur Aufsatzelementlängsachse verlaufen.

Im Folgenden wird nun eine bevorzugte Form des Kopfes des Pufferelements sowie eine bevorzugte Form des Aufnahmeraums innerhalb des Aufsatzelements beschrieben. So ist gemäß einer weiteren Ausgestaltung der erfindungsgemäßen Verbindungsanordnung vorgesehen, dass der Verlauf der äußeren Mantelfläche des Kopfes des Pufferelements und/oder der inneren Mantelfläche des Aufsatzelements konusförmig, insbesondere kegelförmig oder kegelstumpfförmig, oder pyramidenförmig oder pyramidenstumpfförmig ist. Konusförmig bedeutet im Sinne der vorliegenden Erfindung, dass eine Gerade oder eine Kurve oder eine aus mehreren geraden oder kurvenförmigen Abschnitten zusammengesetzte Strecke um eine Achse, nämlich die Pufferelementlängsachse bzw. Aufsatzelementlängsachse, rotiert. Der davon eingeschlossene Bereich bildet einen Konus im Sinne der Erfindung, wobei der Konus in einem Schnitt senkrecht zur Rotationsachse einen kreisförmigen Querschnitt hat. Grundsätzlich ist es wie gesagt aber auch denkbar, dass statt eines kreisförmigen Querschnitts ein eckiger Querschnitt vorgesehen ist, insbesondere ein viereckiger Querschnitt wie bei einer Pyramidenform. Es ist denkbar, dass die äußere Mantelfläche des Kopfes des Pufferelements und/oder die innere Mantelfläche des Aufsatzelements in einem Schnitt entlang der Längsachse eine Außenkontur aufweist, die zumindest abschnittsweise gekrümmt und/oder zumindest abschnittsweise gerade ist und insbesondere mehrere Abschnitte aufweist, die winkelig zueinander verlaufen. Eine solche gekrümmte oder abgestufte Außenkontur hat den Vorteil, dass der Kopf besser in das Aufsatzelement hineinbewegt oder umgekehrt aus dem Aufsatzelement herausbewegt werden kann, da im Falle der Montage bzw. Demontage des Verkleidungsteils dieses im Bereich der zusätzlichen Schraubenverbindung im oberen Abschnitt des Verkleidungsteils vom übrigen Schienenfahrzeug etwas beabstandet sein wird; das Verkleidungsteil wird also in einem spitzen Winkel zu der späteren Endposition eingesetzt.

Gemäß noch einer Ausgestaltung der erfindungsgemäßen Verbindungsanordnung ist vorgesehen, dass die äußere Mantelfläche des Kopfes des Pufferelements und/oder die innere Mantelfläche des Aufsatzelements spiegelsymmetrisch oder rotationssymmetrisch zur Längsachse ist.

Damit die zuvor beschriebene formschlüssige Verbindung, nämlich der Formschluss in Z-Richtung, erreicht wird, ist gemäß noch einer weiteren Ausgestaltung der erfindungsgemäßen Verbindungsanordnung vorgesehen, dass der Innenquerschnitt, insbesondere Innendurchmesser, des Endes des Aufsatzelements mit dem kleinsten Querschnitt kleiner als der maximale Außenquerschnitt, insbesondere maximale Außendurchmesser des Pufferelements, insbesondere kleiner als der Außenquerschnitt, insbesondere Außendurchmesser, des ersten Endes des Kopfes des Pufferelements, ist.

Wenn das Pufferelement in das Aufsatzelement maximal eingeführt ist und Formschluss in Z-Richtung besteht, ist vorzugsweise vorgesehen, dass der größte Teil des Pufferelements und/oder das erste (d.h. bolzenseitige) Ende des Kopfes des Pufferelements innerhalb des Aufnahmeraums bzw. Aufnahmeelements angeordnet ist. Besonders bevorzugt ist in diesem maximal eingeführten Zustand vorgesehen, dass der Aufnahmeraum zu mehr als 60%, bevorzugt zu mehr als 80%, besonders bevorzugt zu mehr als 95%, und/oder zu höchstens 99%, bevorzugt zu höchstens 95%, besonders bevorzugt zu höchstens 90%, vom Kopf des Pufferelements ausgefüllt wird. Mit anderen Worten ist immer ein Abschnitt des Kopfes des Pufferelements nicht mit der Wand des Aufsatzelements in Kontakt. In diesem Abschnitt besteht ein Ringraum zwischen Pufferelement und Aufsatzelement. Dadurch wird die Montage bzw. Demontage weiter vereinfacht und Relativbewegungen zwischen Pufferelement und Aufsatzelement einfacher ermöglicht. Zusätzlich oder alternativ ist der Kopf des Pufferelements nur über einen Teil seiner Länge, insbesondere nur über höchstens 50% seiner Länge, bevorzugt über höchstens 30% seiner Länge, besonders bevorzugt über höchstens 10% seiner Länge, in Kontakt mit der Wand des Aufsatzelements, um dadurch besagten Ringraum zu bilden.

Wie bereits zuvor erläutert, ist insbesondere eine zusätzliche Schraubverbindung zum Befestigen des Verkleidungsteils am übrigen Fahrzeug vorgesehen. Dazu ist gemäß einer Ausgestaltung vorgesehen, dass das Verkleidungsteil an einer ersten Stelle von dem Pufferelement und/oder Aufsatzelement gebildete Mittel für eine Steckverbindung mit dem Fahrzeug und an einer davon beabstandeten Stelle des Verkleidungsteils Mittel für eine Schraubverbindung mit dem Fahrzeug aufweist.

Schließlich ist gemäß noch einer Ausgestaltung der erfindungsgemäßen Verbindungsanordnung vorgesehen, dass das Pufferelement mit dem Träger und das Aufsatzelement mit dem Verkleidungsteil verbunden, insbesondere daran angeschraubt oder angeschweißt, ist. Wie bereits angedeutet, ist der Puffer insbesondere starr mit dem Wagenkasten verbunden, was insbesondere durch Verschrauben bewerkstelligt ist. Das Aufsatzelement kann an das Verkleidungsteil angeklebt sein oder einstückig mit diesem ausgeführt bzw. in das Verkleidungsteil einlaminiert sein. Grundsätzlich ist auch der umgekehrte Fall denkbar, dass das Pufferelement mit dem Verkleidungsteil und das Aufsatzelement mit dem Träger bzw. Wagenkasten verbunden ist.

Die zuvor hergeleitete und aufgezeigte Aufgabe wird ferner gemäß einer zweiten Lehre der vorliegenden Erfindung gelöst durch ein Schienenfahrzeug mit einer wie zuvor definierten Verbindungsanordnung. Dabei ist das Verkleidungsteil insbesondere eine Außenverkleidung, die also mit der Umgebung in Kontakt ist und Fahrtwind und anderen Umgebungseinflüssen ausgesetzt ist.

Es gibt nun eine Vielzahl von Möglichkeiten, die erfindungsgemäße Verbindungsanordnung und das erfindungsgemäße Schienenfahrzeug auszugestalten und weiterzubilden. Hierzu sei einerseits verwiesen auf die dem Patentanspruch 1 nachfolgenden Patentansprüche, andererseits auf die Beschreibung eines Ausführungsbeispiels in Verbindung mit der Zeichnung. In der Zeichnung zeigt:
- Fig. 1: eine Schnittansicht eines mit einer Verbindungsanordnung an einem Schienenfahrzeug befestigten Verkleidungsteils,
- Fig. 2: eine Schnittansicht der Verbindungsanordnung zur Befestigung des Verkleidungsteils in Fig. 1 und
- Fig. 3: ein Pufferelement der Verbindungsanordnung aus Fig. 2.

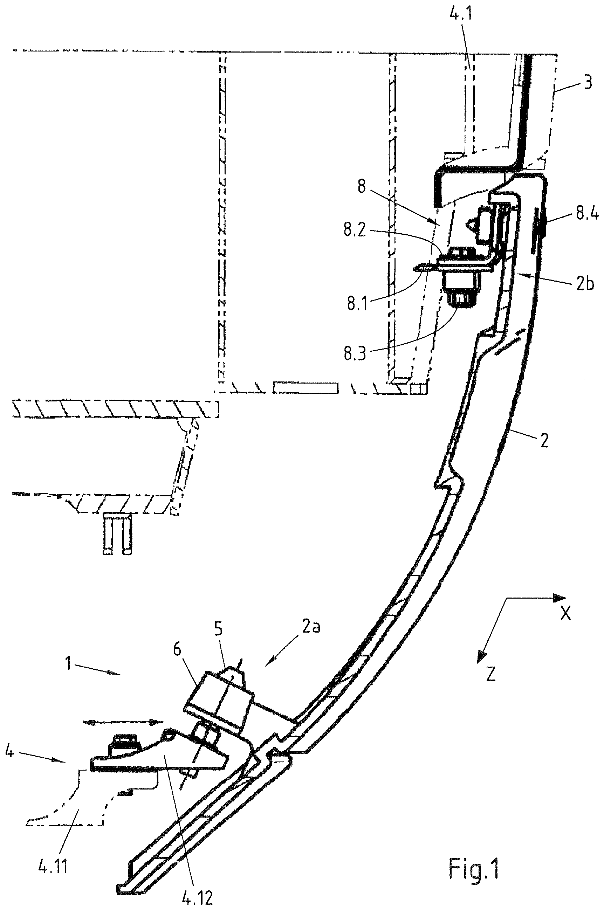

Die in Fig. 1 dargestellte Verbindungsanordnung 1 verbindet ein Verkleidungsteil 2 mit einem Träger 4, der Bestandteil des Untergestells 4.11 des Wagenkastens 4.1 des Schienenfahrzeugs 3 ist. Das Verkleidungsteil 2 ist über die formschlüssige Verbindung eines Pufferelements 5 mit einem Aufsatzelement 6 an der Stelle 2a des Verbindungsteils 2 mit dem übrigen Fahrzeug 3 verbunden.

Zusätzlich ist das Verkleidungsteil 2 an der Stelle 2b über eine Schraubverbindung 8 mit dem übrigen Fahrzeug 3 verbunden. Die Schraubverbindung 8 weist am Wagenkasten 4.1 angeschweißte Laschen 8.1, mit dem Verkleidungsteil 2 fest verbundene Halter 8.2 und eine die Laschen 8.1 und die Halter 8.2 verbindende Schraube 8.3 auf. Die Verbindung zwischen Halter 8.2 und Verkleidungsteil 2 erfolgt über eine weitere Schraube 8.4, die sich von der Außenseite des Verkleidungsteils 2 bedienen lässt.

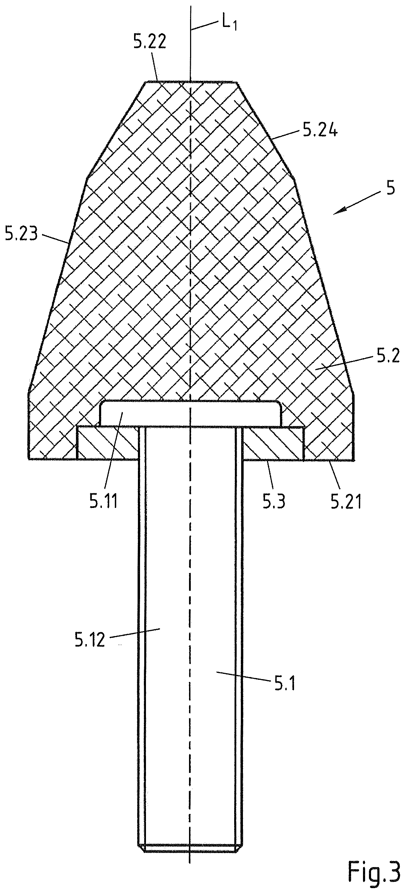

Teil des Untergestells 4.11 des Wagenkastens 4.1 ist auch eine Konsole 4.12, die in X-Richtung und Y-Richtung justiert werden kann. Mit der Konsole 4.12 ist das Pufferelement 5 verschraubt, welches im Detail auch in Fig. 3 dargestellt ist. Die Position des Pufferelements ist entlang seiner Pufferelementlängsachse bzw. in Z-Richtung einstellbar. Somit kann die Position des Pufferelementes 5 in jede Richtung verstellt werden.

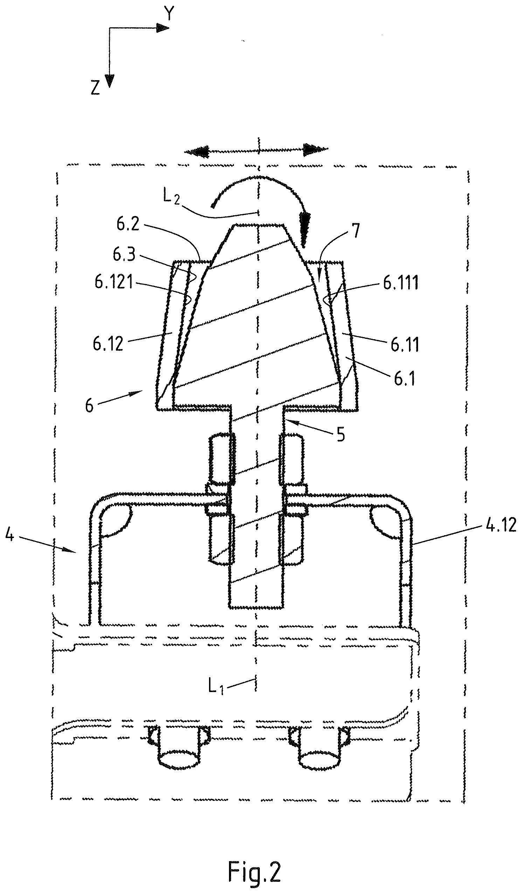

Fig. 2 zeigt das Pufferelement 5 und das Aufsatzelement 6 im verbundenen Zustand. Pfeile zeigen dabei, dass translatorische und rotatorische Relativbewegungen zwischen Pufferelement 5 und Aufsatzelement 6 auch im montierten Zustand möglich sind.

Wie Fig. 3 zeigt, erstreckt sich dasPufferelement 5 entlang einer Pufferelementlängsachse L₁, die koaxial zu einer Aufsatzelementlängsachse L₂ verläuft. Im montierten Zustand sind sowohl das Pufferelement 5 als auch das Aufsatzelement 6 zwischen Verkleidungsteil 2 und Träger 4 angeordnet, wie insbesondere Fig. 1 zeigt.

Das Pufferelement 5 besteht aus einem Bolzen 5.1 und einem Kopf 5.2. Der Bolzen 5.1 ist ein Gewindebolzen und weist einen Bolzenkopf 5.11 und einen Bolzenschaft 5.12 auf. Der Bolzenkopf 5.11 ist in den Kopf 5.2 des Pufferelements 5 eingesetzt und stoffschlüssig damit verbunden. Dabei ist der Bolzenkopf 5.11 oberseitig und seitlich vom Material des Kopfes 5.2 umgeben. Unterseitig ist ein zusätzliches Haltemittel 5.3 vorgesehen, das den Bolzenkopf 5.11 zusätzlich formschlüssig mit dem Kopf 5.2 verbindet.

Der gesamte Bolzen 5.1 besteht im vorliegenden Ausführungsbeispiel aus Metall, der Kopf 5.2 des Pufferelements 5 aus Kunststoff.

Der Kopf 5.2 weist eine äußere Mantelfläche 5.23 in einer Konusform auf, hier eine Kegelstumpfform. Der Kopf 5.2 verjüngt sich dadurch vom ersten Ende 5.21 zu seinem zweiten Ende 5.22, wobei die Außenkontur 5.24 mehrere gerade Abschnitte aufweist, die zueinander winkelig angeordnet sind.

Wie Fig. 2 zeigt, besteht das Aufsatzelement 6 aus einer umlaufenden Wand 6.1, die einen Aufnahmeraum 7 bildet. Das Aufsatzelement 6 ist hier hülsenförmig ausgebildet, wobei die Innenflächen 6.111 und 6.121 gegenüberliegender Wandabschnitte 6.11 und 6.12 zu einem Ende 6.2 des Aufsatzelements 6 aufeinander zulaufen, wodurch der Aufnahmeraum 7 sich zu dem Ende 6.2 hin verjüngt. Der Innendurchmesser des Endes 6.2 des Aufsatzes 6 ist kleiner als der Außendurchmesser des ersten Endes 5.21 des Kopfes 5.2 des Pufferelements 5, so dass sich in Z-Richtung eine formschlüssige Verbindung ergibt (in Z-Richtung kann das Aufsatzelement 6 also nicht weiter als bis zu der in Fig. 2 dargestellten Endposition relativ zum Pufferelement 5 bewegt werden).

In Fig. 3 ist deutlich erkennbar, dass das Pufferelement 5 bzw. der Kopf 5.1 die Wand 6.1 des Aufsatzelements 6 nur über einen Teil seiner Länge berührt, wohingegen zwischen dem übrigen Teil des Kopfes 5.2 und der Wand 6.1 ein Abstand besteht. Durch diesen Abstand kann, insbesondere bei der Montage oder Demontage des Verkleidungsteils 2, das Aufsatzelement 6 relativ zum Pufferelement 5 gegenüber der in Fig. 2 dargestellten Lage angewinkelt werden.

## Patentansprüche

1. Verbindungsanordnung (1) zum Befestigen eines Verkleidungsteils (2) an einem Fahrzeug (3), insbesondere Schienenfahrzeug (3),
- mit einem Fahrzeug (3),
- mit einem Träger (4), der ein erstes Bauteil (4) bildet und Bestandteil des Fahrzeugs (3) ist,
- mit dem Verkleidungsteil (2), das ein zweites Bauteil (2) bildet,
- mit einem sich entlang einer Pufferelementlängsachse (L₁) erstreckenden Pufferelement (5), das mit dem einen der Bauteile (2,4) verbunden ist, und
- mit einem sich entlang einer Aufsatzelementlängsachse (L₂) erstreckenden Aufsatzelement (6), das mit dem anderen der Bauteile (2,4) verbunden ist,
- wobei das Aufsatzelement (6) auf das Pufferelement (5) aufgesetzt ist,
**dadurch gekennzeichnet, dass** das Pufferelement (5) und das Aufsatzelement (6) zwischen Verkleidungsteil (2) und Träger (4) angeordnet sind und die Verbindung zwischen Pufferelement (5) und Aufsatzelement (6) flexibel ist und dass das Pufferelement (5) einen Bolzen (5.1) mit einem Bolzenkopf (5.11) und einem Bolzenschaft (5.12) und einen mit dem Bolzen (5.1) verbundenen Kopf (5.2) mit einem zum Bolzen (5.1) weisenden ersten Ende (5.21) und einem vom Bolzen (5.1) wegweisenden zweiten Ende (5.22) aufweist, wobei das Material des Kopfes (5.2) eine höhere Elastizität als das Material des Trägers (4) und des Aufsatzelements (6) aufweist.

2. Verbindungsanordnung (1) nach Anspruch 1, **dadurch gekennzeichnet, dass** das Material des Kopfes (5.2) auch eine höhere Elastizität als der Bolzen (5.1), aufweist, wobei der Kopf (5.2) insbesondere einen sich zu einem der Enden (5.21,5.22) verjüngenden Körper (5.23) aufweist.

3. Verbindungsanordnung (1) nach Anspruch 1 oder 2, **dadurch gekennzeichnet, dass** der Bolzenkopf (5.11) zumindest oberseitig und seitlich vom Material des Kopfes (5.2) umgeben ist.

4. Verbindungsanordnung (1) nach einem der vorangehenden Ansprüche, **dadurch gekennzeichnet, dass** der Kopf (5.2) aus einem Material mit einem Elastizitätsmodul von höchstens 3000 N/mm², bevorzugt höchstens 1000 N/mm², besonders bevorzugt höchstens 500 N/mm², besteht.

5. Verbindungsanordnung (1) nach einem der vorangehenden Ansprüche, **dadurch gekennzeichnet, dass** der Bolzen (5.1) aus Metall und/oder der Kopf (5.2) aus Kunststoff besteht.

6. Verbindungsanordnung (1) nach einem der vorangehenden Ansprüche, **dadurch gekennzeichnet, dass** der Bolzen (5.1) mit dem Kopf (5.2) durch Stoffschluss, insbesondere durch Kleben und/oder Anvulkanisieren, und/oder durch Formschluss, verbunden ist.

7. Verbindungsanordnung (1) nach einem der vorangehenden Ansprüche, **dadurch gekennzeichnet, dass** das Aufsatzelement (6) eine umlaufende Wand (6.1) aufweist, die einen Aufnahmeraum (7) für das Pufferelement (5) begrenzt, wobei das Aufsatzelement (6) insbesondere hülsenförmig oder napfförmig ausgebildet ist.

8. Verbindungsanordnung (1) nach Anspruch 7, **dadurch gekennzeichnet, dass** die Innenflächen (6.111, 6.121) gegenüberliegender Abschnitte (6.11,6.12) der Wand (6.1) zu einem Ende (6.2) des Aufsatzelements (6) aufeinander zulaufen und/oder der Aufnahmeraum (7) sich zu einem Ende (6.2) des Aufsatzelements (6) verjüngt.

9. Verbindungsanordnung (1) nach einem der Ansprüche 2 bis 8, **dadurch gekennzeichnet, dass** der Verlauf der äußeren Mantelfläche (5.24) des Kopfes (5.2) des Pufferelements (5) und/oder der inneren Mantelfläche (6.3) des Aufsatzelements (6) konusförmig, insbesondere kegelförmig oder kegelstumpfförmig, oder pyramidenförmig oder pyramidenstumpfförmig ist.

10. Verbindungsanordnung (1) nach einem der Ansprüche 2 bis 9, **dadurch gekennzeichnet, dass** die äußere Mantelfläche (5.24) des Kopfes (5.2) des Pufferelements (5) und/oder die innere Mantelfläche (6.3) des Aufsatzelements (6) in einem Schnitt entlang der Längsachse (L₁, L₂) eine Außenkontur aufweist, die zumindest abschnittsweise gekrümmt und/oder zumindest abschnittsweise gerade ist und insbesondere mehrere Abschnitte aufweist, die winkelig zueinander verlaufen.

11. Verbindungsanordnung (1) nach einem der Ansprüche 2 bis 10, **dadurch gekennzeichnet, dass** die äußere Mantelfläche (5.24) des Kopfes (5.2) des Pufferelements (5) und/oder die innere Mantelfläche (6.3) des Aufsatzelements (6) spiegelsymmetrisch oder rotationssymmetrisch zur Längsachse (L₁, L₂) ist.

12. Verbindungsanordnung (1) nach einem der vorangehenden Ansprüche, **dadurch gekennzeichnet, dass** der Innenquerschnitt, insbesondere Innendurchmesser, des Endes (6.2) des Aufsatzelements (6) mit dem kleinsten Querschnitt kleiner als der maximale Außenquerschnitt, insbesondere maximale Außendurchmesser des Pufferelements (5) ist.

13. Verbindungsanordnung (1) nach einem der vorangehenden Ansprüche, **dadurch gekennzeichnet, dass** das Verkleidungsteil (2) an einer ersten Stelle (2a) von dem Pufferelement (5) und/oder Aufsatzelement (7) gebildete Mittel für eine Steckverbindung mit dem Fahrzeug (3) und an einer davon beabstandeten Stelle (2b) des Verkleidungsteils (2) Mittel (8) für eine Schraubverbindung mit dem Fahrzeug (3) aufweist.

14. Verbindungsanordnung (1) nach einem der vorangehenden Ansprüche, **dadurch gekennzeichnet, dass** das Pufferelement (5) mit dem Träger (4) und das Aufsatzelement (6) mit dem Verkleidungsteil (2) verbunden, insbesondere angeschraubt oder angeschweißt ist.

15. Schienenfahrzeug (3) mit einer Verbindungsanordnung (1) nach einem der vorangehenden Ansprüche.

## Claims

1. Connecting arrangement (1) for fastening a cladding part (2) to a vehicle (3), in particular a rail vehicle (3),
- with a vehicle (3),
- with a carrier (4) which forms a first component (4) and is a part of the vehicle (3),
- with the cladding part (2) which forms a second component (2),
- with a buffer element (5) which extends along a buffer element longitudinal axis (14) and is connected to one of the components (2, 4), and
- with an attachment element (6) which extends along an attachment element longitudinal axis (L2) and is connected to the other of the components (2, 4),
- the attachment element (6) being fitted onto the buffer element (5),
**characterized, in that** the buffer element (5) and the attachment element (6) are arranged between the cladding part (2) and the carrier (4), and the connection between the buffer element (5) and the attachment element (6) is flexible, and **in that** the buffer element (5) has a bolt (5.1) having a bolt head (5.11) and a bolt shaft (5.12) and a head (5.2) connected to the bolt (5.1) and having a first end (5.21) facing the bolt (5.1) and a second end (5.22) facing away from the bolt (5.1), the material of the head (5.2) having a higher elasticity than the material of the carrier (4) and of the attachment element (6).

2. Connecting arrangement (1) according to claim 1, **characterized in that** the material of the head (5.2) also has a higher elasticity than the bolt (5.1), the head (5.2) in particular having a body (5.23) tapering towards one of the ends (5.21, 5.22).

3. Connecting arrangement (1) according to claim 1 or 2, **characterized in that** the bolt head (5.11) is surrounded at least on the top and laterally by the material of the head (5.2).

4. Connecting arrangement (1) according to one of the preceding claims, **characterized in that** the head (5.2) consists of a material having a modulus of elasticity of at most 3000 N/mm², preferably at most 1000 N/mm², particularly preferably at most 500 N/mm².

5. Connecting arrangement (1) according to one of the preceding claims, **characterized in that** the bolt (5.1) is made of metal and/or the head (5.2) is made of plastic.

6. Connecting arrangement (1) according to one of the preceding claims, **characterized in that** the bolt (5.1) is connected to the head (5.2) by material closure, in particular by gluing and/or vulcanizing, and/or by form closure.

7. Connecting arrangement (1) according to one of the preceding claims, **characterized in that** the attachment element (6) has a circumferential wall (6.1) which delimits a receiving space (7) for the buffer element (5), the attachment element (6) being designed in particular sleeve-shaped or cup-shaped.

8. Connecting arrangement (1) according to claim 7, **characterized in that** the inner surfaces (6.111, 6.121) of opposite sections (6.11, 6.12) of the wall (6.1) converge towards one end (6.2) of the attachment element (6) and/or the receiving space (7) tapers towards one end (6.2) of the attachment element (6).

9. Connecting arrangement (1) according to one of claims 2 to 8, **characterized in that** the course of the outer circumferential surface (5.24) of the head (5.2) of the buffer element (5) and/or of the inner circumferential surface (6.3) of the attachment element (6) is conus shaped, in particular conical or frustoconical, or pyramidal or shaped like a truncated pyramid.

10. Connecting arrangement (1) according to one of claims 2 to 9, **characterized in that** the outer circumferential surface (5.24) of the head (5.2) of the buffer element (5) and/or the inner circumferential surface (6.3) of the attachment element (6) has, in a section along the longitudinal axis (Li, L2), an outer contour which is curved at least in sections and/or straight at least in sections and in particular has a plurality of sections which run at an angle to one another.

11. Connection arrangement (1) according to one of claims 2 to 10, **characterized in that** the outer circumferential surface (5.24) of the head (5.2) of the buffer element (5) and/or the inner circumferential surface (6.3) of the attachment element (6) is mirror-symmetrical or rotationally symmetrical with respect to the longitudinal axis (Li, L2).

12. Connecting arrangement (1) according to one of the preceding claims, **characterized in that** the internal cross-section, in particular the internal diameter, of the end (6.2) of the attachment element (6) with the smallest cross-section is smaller than the maximum external cross-section, in particular the maximum external diameter, of the buffer element (5).

13. Connecting arrangement (1) according to one of the preceding claims, **characterized in that** the cladding part (2) has, at a first location (2a), means formed by the buffer element (5) and/or attachment element (7) for a plug-in connection to the vehicle (3) and, at a location (2b) of the cladding part (2) spaced therefrom, means (8) for a screw connection to the vehicle (3).

14. Connecting arrangement (1) according to one of the preceding claims, **characterized in that** the buffer element (5) is connected to the carrier (4) and the attachment element (6) is connected, in particular screwed or welded, to the cladding part (2).

15. Rail vehicle (3) with a connecting arrangement (1) according to one of the preceding claims.

## Revendications

1. Système de connexion (1) pour la fixation d'une partie de revêtement (2) sur un véhicule (3), en particulier un véhicule ferroviaire (3),
- avec un véhicule (3),
- avec un support (4), lequel forme une première partie structurale (4) et fait partie intégrante du véhicule (3),
- avec la partie de revêtement (2), laquelle forme une deuxième partie structurale (2),
- avec un élément tampon (5) s'étendant le long d'un axe longitudinal d'élément tampon (L1), lequel est connecté à l'une des parties structurales (2, 4), et
- avec un élément de pose (6) s'étendant le long d'un axe longitudinal d'élément de pose (L2), lequel est connecté à l'autre des parties structurales (2, 4),
- dans lequel l'élément de pose (6) est posé sur l'élément tampon (5),
**caractérisé en ce que** l'élément tampon (5) et l'élément de pose (6) sont disposés entre la partie de revêtement (2) et le support (4) et la connexion entre l'élément tampon (5) et l'élément de pose (6) est flexible et **en ce que** l'élément tampon (5) comprend un boulon (5.1) avec une tête de boulon (5.11) et une tige de boulon (5.12) et une tête (5.2) connectée au boulon (5.1) avec une première extrémité (5.21) dirigée vers le boulon (5.1) et une deuxième extrémité (5.22) opposée au boulon (5.1), dans lequel le matériau de la tête (5.2) possède une élasticité plus élevée que le matériau du support (4) et de l'élément de pose (6).

2. Système de connexion (1) selon la revendication 1, **caractérisé en ce que** le matériau de la tête (5.2) possède également une élasticité plus élevée que le boulon (5.1), dans lequel la tête (5.2) comprend en particulier un corps (5.23) s'effilant vers l'une des extrémités (5.21, 5.22).

3. Système de connexion (1) selon la revendication 1 ou la revendication 2, **caractérisé en ce que** la tête de boulon (5.11) est entourée au moins sur sa face supérieure et latéralement par le matériau de la tête (5.2).

4. Système de connexion (1) selon l'une des revendications précédentes, **caractérisé en ce que** la tête (5.2) est constituée d'un matériau avec un module d'élasticité de 3 000 N/mm2 au plus, de préférence de 1 000 N/mm2 au plus, de manière particulièrement préférée de 500 N/mm2 au plus.

5. Système de connexion (1) selon l'une des revendications précédentes, **caractérisé en ce que** le boulon (5.1) est constitué de métal et/ou la tête (5.2) est constituée de matière plastique.

6. Système de connexion (1) selon l'une des revendications précédentes, **caractérisé en ce que** le boulon (5.1) est connecté à la tête (5.2) par liaison de matière, en particulier par collage et/ou vulcanisation, et/ou par complémentarité de formes.

7. Système de connexion (1) selon l'une des revendications précédentes, **caractérisé en ce que** l'élément de pose (6) comprend une paroi périphérique (6.1), laquelle délimite un espace de réception (7) pour l'élément tampon (5), dans lequel l'élément de pose (6) est en particulier conçu en forme de manchon ou en forme de coupelle.

8. Système de connexion (1) selon la revendication 7, **caractérisé en ce que** les surfaces internes (6.111, 6.121) de segments opposés (6.11, 6.12) de la paroi (6.1) convergent vers une extrémité (6.2) de l'élément de pose (6) et/ou l'espace de réception (7) s'effile vers une extrémité (6.2) de l'élément de pose (6).

9. Système de connexion (1) selon l'une des revendications 2 à 8, **caractérisé en ce que** le profil de la surface d'enveloppe externe (5.24) de la tête (5.2) de l'élément tampon (5) et/ou de la surface d'enveloppe interne (6.3) de l'élément de pose (6) est de forme conique, en particulier en forme de cône ou en forme de cône tronqué, ou en forme de pyramide ou en forme de pyramide tronquée.

10. Système de connexion (1) selon l'une des revendications 2 à 9, **caractérisé en ce que** la surface d'enveloppe externe (5.24) de la tête (5.2) de l'élément tampon (5) et/ou la surface d'enveloppe interne (6.3) de l'élément de pose (6) comprennent dans un segment le long de l'axe longitudinal (L1, L2) un contour externe, lequel est incurvé au moins par segments et/ou droit au moins par segments et comprend en particulier plusieurs segments qui s'étendent angulairement entre eux.

11. Système de connexion (1) selon l'une des revendications 2 à 10, **caractérisé en ce que** la surface d'enveloppe externe (5.24) de la tête (5.2) de l'élément tampon (5) et/ou la surface d'enveloppe interne (6.3) de l'élément de pose (6) sont à symétrie spéculaire ou à symétrie de rotation par rapport à l'axe longitudinal (L1, L2).

12. Système de connexion (1) selon l'une des revendications précédentes, **caractérisé en ce que** la section transversale interne, en particulier le diamètre interne, de l'extrémité (6.2) de l'élément de pose (6) avec la section transversale la plus petite est inférieure à la section transversale externe maximale, en particulier au diamètre externe maximal de l'élément tampon (5).

13. Système de connexion (1) selon l'une des revendications précédentes, **caractérisé en ce que** la partie de revêtement (2) comprend en une première position (2a) des moyens formés par l'élément tampon (5) et/ou l'élément de pose (7) pour une connexion enfichable au véhicule (3) et en une position écartée de celle-ci (2b) de la partie de revêtement (2) des moyens (8) pour une connexion par vis au véhicule (3).

14. Système de connexion (1) selon l'une des revendications précédentes, **caractérisé en ce que** l'élément tampon (5) est connecté au support (4) et l'élément de pose (6) est connecté, en particulier vissé ou soudé, à la partie de revêtement (2).

15. Véhicule ferroviaire (3) avec un système de connexion (1) selon l'une des revendications précédentes.
